# EUROPÄISCHE PATENTSCHRIFT

(11) **EP 1 791 785 B1**
(45) Veröffentlichungstag und Bekanntmachung des Hinweises auf die Patenterteilung: **23.11.2011**
(21) Anmeldenummer: 05782915.2
(22) Anmeldetag: 10.09.2005
(51) Int. Cl.: C01B 13/34, C01B 13/20, C01G 45/00, C01G 51/00

(54) **Verfahren zur Herstellung alkalimetallhaltiger, mehrkomponentiger Metalloxidverbindungen**
Method for producing multi-constituent, metal oxide compounds containing alkali metals
Procédé pour produire des composés d'oxydes métalliques, à plusieurs constituants, renfermant des métaux alcalins

(30) Priorität: 10.09.2004 DE 102004044266
(43) Veröffentlichungstag der Anmeldung: 06.06.2007
(73) Patentinhaber: IBU-tec advanced materials AG, 99425 Weimar (DE)
(72) Erfinder: DOMESLE, Rainer, 63755 Alzenau-Kaelberau (DE); AMBROSIUS, Stefan, 99439 Berlstedt (DE); KREUZER, Thomas, 61184 Karben (DE)
(74) Vertreter: Finger, Catrin
(86) Internationale Anmeldenummer: PCT/EP2005/009759
(87) Internationale Veröffentlichungsnummer: WO 2006/027270

(56) Entgegenhaltungen:
- WO-A2-02/072471
- US-A- 5 742 070
- US-A- 5 958 362
- TANIGUCHI I ET AL: "Electrochemical properties of LiM1/6Mn11/6O4 (M = Mn, Co, Al and Ni) as cathode materials for Li-ion batteries prepared by ultrasonic spray pyrolysis method" JOURNAL OF POWER SOURCES, ELSEVIER, AMSTERDAM, NL, Bd. 109, Nr. 2, 1. Juli 2002 (2002-07-01), Seiten 333-339, XP004361546 ISSN: 0378-7753
- TANIGUCHI I ET AL: "Particle morphology and electrochemical performances of spinel LiMn2O4 powders synthesized using ultrasonic spray pyrolysis method" SOLID STATE IONICS, NORTH HOLLAND PUB. COMPANY. AMSTERDAM, NL, Bd. 146, Nr. 3-4, 2. Februar 2002 (2002-02-02), Seiten 239-247, XP004335378 ISSN: 0167-2738
- DATABASE COMPENDEX [Online] ENGINEERING INFORMATION, INC., NEW YORK, NY, US; AIKIYO H ET AL: "Effect of particle morphology on electrochemical property of LiMn2 O4" XP002404546 Database accession no. E2001366639187 & J CERAM SOC JPN; NIPPON SERAMIKKUSU KYOKAI GAKUJUTSU RONBUNSHI/JOURNAL OF THE CERAMIC SOCIETY OF JAPAN JUNE 2001, Bd. 109, Nr. 1270, Juni 2001 (2001-06), Seiten 506-510,

## Beschreibung

Die vorliegende Erfindung betrifft ein Verfahren zur Herstellung alkalimetallhaltiger, mehrkomponentiger Metalloxidverbindungen in Pulverform.

Mehrkomponentige Metalloxidverbindungen werden zum Beispiel in der Chemie als Katalysatoren für die Herstellung von Alkoholen eingesetzt. Beispiele hierfür geben die US-Patentschriften US 4,291,126 und US 4,659,742. Darüber hinaus finden solche Metalloxidverbindungen Anwendung in der keramischen Industrie und bei der Fertigung von elektrischen Batterien, wie zum Beispiel die Verbindungen LiAlO₂, LiMn₂O₄, LiCoO₂ oder Li₂ZrO₃. Zur Verbesserung der anwendungstechnischen Eigenschaften ist es auch bekannt, solche Metalloxidverbindungen noch zusätzlich zu dotieren, wie es zum Beispiel bei den dotierten Metalloxidverbindungen La_{0,85}Na_{0,15}MnO₃, LiCo_{0,8}Ni₀,₂O₂, LiAl_{y}Co_{1-y}O₂, und LiCo_{y}Mn_{2-y}O₄ der Fall ist. Hierbei wird eine besonders homogene Dotierung der fertigen Metalloxidpulver gewünscht.

Aufgrund der hohen Löslichkeit von Alkalimetallverbindungen scheiden übliche Fällungsverfahren aus wässerigen Lösungen zur Herstellung von alkalimetallhaltigen Pulvern praktisch aus, besonders dann, wenn drei- und mehrkomponentige Metalloxide gewünscht werden.

Übliche Festkörperreaktionsverfahren in Drehrohröfen oder Kammeröfen führen zu eher zusammengebackenem, grobteiligen und schwer zerkleinerbarem Material, da nahe dem oder oberhalb des jeweiligen Schmelzpunktes gearbeitet wird. Bei tieferen Temperaturen, wo die Gefahr des Zusammenbackens nicht besteht, würden die Festkörperreaktionen nur sehr langsam ablaufen und daher wirtschaftlich nicht sinnvoll sein. Außerdem sind homogen dotierte Materialien mit diesen üblichen, thermischen Prozessen nur schwer zugänglich.

Die Weiterverarbeitung zum Endprodukt erfordert aber zum Beispiel wegen der Miniaturisierung von Baueinheiten oft pulverförmige und/oder oberflächenreiche Metalloxidverbindungen mit geringen mittleren Partikeldurchmessern, die bei zusammengebackenem oder zusammengesintertem Material nur durch eine intensive Mahlung erhältlich sind. Hierbei kann das Material durch Abrieb von Mahlkörpern verunreinigt werden.

Aus der WO 02/072471 A2 ist ein Verfahren zur Herstellung eines multinären Metalloxidpulvers bekannt, das sich zur Verwendung als Vorläufer von Hochtemperatur-Supraleitern eignet. Zur Herstellung dieses Pulvers wird ein Gemisch der entsprechenden Metallsalze und/oder Metalloxide und/oder Metalle, welches mindestens drei Elemente ausgewählt aus Cu, Bi, Pb, Y, Tl, Hg, La enthält, in fester Form oder in Form einer Lösung oder einer Suspension im erforderlichen stöchiometrischen Verhältnis in einen Pulsationsreaktor mit einer pulsierenden, aus einer flammenlosen Verbrennung resultierenden Gasströmung eingebracht und teilweise oder vollständig zum multinären Metalloxid umgesetzt.

In Taniguchi et al, "Electrochemical properties of LiM1/6Mn11/6O4 (M = Mn, Co, Al and Ni) as cathode materials for Li-ion batteries prepared by ultrasonic spray pyrolysis method", Journal of Power Sources 109(2), 333-339, wird die Herstellung von LiMn₂O₄ sowie LiM_{1/6}Mn_{11/6}O₄ mit M=Mn, Co, Al oder Ni mittels Ultraschall-Sprühpyrolyse beschrieben. Bei der Sprühpyrolyse wird eine wässrige Lösung der Ausgangsverbindungen, beispielsweise Metall-Nitrate, mit einem Ultraschall-Zerstäuber in feine Tröpfchen zerlegt und in einem Reaktionsrohr bei 800°C pyrolysiert.

Aufgabe der vorliegenden Erfindung ist es, ein Verfahren zur Herstellung von alkalimetallhaltigen, das heißt Lithium, Natrium, Kalium, Rubidium und/oder Cäsium enthaltenden, Metalloxidverbindungen in Pulverform anzugeben, welche eine homogene Verteilung der beteiligten Komponenten aufweisen.

Dieses Problem wird dadurch gelöst, daß Vorläuferverbindungen der Komponenten der gewünschten Metalloxidverbindung in fester Form oder in Form einer Lösung oder einer Suspension in einen Pulsationsreaktor mit einer aus einer flammenlosen Verbrennung resultierenden Gasströmung eingebracht und teilweise oder vollständig zur gewünschten Metalloxidverbindung umgesetzt werden, wobei die Vorläuferverbindungen ein Gemisch wenigstens einer ersten Metallverbindung aus der Gruppe der Alkalimetalle mit wenigstens einer zweiten Metallverbindung, ausgewählt aus der Gruppe bestehend aus den Übergangsmetallen, den übrigen Hauptgruppenmetallen und den Lanthaniden, im gewünschten Verhältnis enthalten.

Unter alkalimetallhaltigen Metalloxidverbindungen werden im Rahmen dieser Erfindung aus wenigsten zwei Komponenten bestehende Verbindungen verstanden, bei denen wenigstens eine der verbindungsbildenden Komponenten ein Alkalimetall ist. Beispiele hierfür sind LiAlO₂ oder LiMn₂O₄. Darunter fallen auch solche Verbindungen, bei denen ein Alkalimetall und/oder Metall teilweise durch ein anderes Metall substituiert ist, wie zum Beispiel in LiCo_{0,8}Ni_{0,2}O₂. Ebenfalls inbegriffen sind Verbindungen mit einer Alkalimetall-Dotierung (zum Beispiel La_{0,85}Na_{0,15}MnO₃), wobei im Wirtsgitter ein Alkalimetallion eingebaut ist. Unter Metalloxidverbindungen sind daneben auch Materialien zu verstehen, bei denen mit geeigneten Methoden, zum Beispiel röntgenografisch, zwei oder mehrere unterschiedliche Verbindungen nachgewiesen werden können.

Die Metalloxidverbindung wird vom heißen Gasstrom durch geeignete Filter abgetrennt und liegt dann in Pulverform mit mittleren Partikelgrößen bis 125 µm vor, bevorzugt mit mittleren Partikelgrößen zwischen 0,1 und 50 µm, beziehungsweise zwischen 1 und 30 µm. Aber auch sogenannte Nanopulver mit mittleren Partikelgrößen zwischen 10 und 100 nm sind bei entsprechender Wahl der Prozeßparameter mit diesem Verfahren zugänglich, wenn die Vorläuferverbindungen in Form von Lösungen in den pulsierenden Gasstrom aufgegeben werden.

Ein besonderer Vorteil des erfindungsgemäßen Verfahrens im Vergleich zu Drehrohren und Herdwagenöfen ist die extreme Gleichmäßigkeit der thermischen Behandlung im pulsierenden Gasstrom. Dies ist auch bei alternativen Verfahren wie der Fallrohrbehandlung mit externer Beheizung (Heißwandreaktor) nicht gegeben, welche durch unterschiedliche Fallgeschwindigkeiten und Randzoneneffekte zu einem inhomogenen Material führen. Ähnliches gilt für Sprüh- und Flammenpyrolyseverfahren.

Die Calcinierung im pulsierenden Gasstrom ermöglicht dagegen eine sehr einheitliche Behandlung der Einsatzstoffe bis nahe unterhalb der Erweichungs- oder Schmelztemperaturen der Ausgangsmaterialien oder des Endproduktes, ohne daß sich größere, zusammengebackene Agglomerate bilden.

Mit dem Verfahren können Metalloxidverbindungen hergestellt werden, die als Alkalimetalle die Metalle Lithium, Natrium, Kalium, Rubidium, Cäsium oder Mischungen davon enthalten. Die zweiten Metallverbindungen sind bevorzugt ausgewählt aus Verbindungen des Aluminiums, Mangans, Kobalts, Zirkons, Eisens, Chroms, Zinks, Nickels und Verbindungen der Lanthaniden.

Sowohl die Alkalimetalle als auch die Metalle aus der Gruppe der Übergangsmetalle, der übrigen Hauptgruppenmetalle und der Lanthaniden werden dem Verfahren in Form eines Gemisches geeigneter Vorläuferverbindungen zugeführt. Bevorzugt werden wässerige oder nichtwässerige Lösungen oder Suspensionen aus ungelösten und gegebenenfalls gelösten Vorläuferverbindungen in den Pulsationsreaktor eingebracht. Die Vorläuferverbindungen können beliebige Salze anorganischer oder organischer Säuren oder anorganischer oder organischer Verbindungen der genannten Metalle sein, insbesondere Nitrate, Chloride, Sulfate, Acetate, Ammine, Hydroxide, Carbonate, Oxalate, Citrate und Tartrate. Die wässerigen oder nichtwässerigen Lösungen der Vorläuferverbindungen können zusätzlich feste Komponenten in Form von Hydroxiden, Oxiden, Carbonaten, Oxalaten und/oder anderen ungelöst vorliegenden Salzen der ersten und zweiten Metallverbindungen enthalten.

Gleichfalls können besonders reaktionsfähige Ausgangsstoffe oder Materialzusammensetzungen auch als Pulvergemische zum Beispiel über einen Pulverinjektor in den Reaktor eingebracht werden. Es kann sich hierbei um innige Gemenge von Feststoffen in Form von feinteiligen Hydroxiden, Oxiden, Carbonaten, Oxalaten und/oder ungelöst vorliegenden Salzen der ersten und zweiten Metallverbindungen handeln.

Ein für das erfindungsgemäße Verfahren verwendbarer Pulsationsreaktor ist zum Beispiel in der WO 02/072471 A2 beschrieben. Er enthält eine Brennkammer sowie ein Resonanzrohr. Verbrennungsluft und Brennstoff werden der Brennkammer über sogenannte aerodynamische Ventile zugeführt, die sich bei Unterdruck in der Brennkammer öffnen und bei Überdruck schließen. Die Zündung des Brenngasgemisches in der Brennkammer erzeugt einen Überdruck, der zum Schließen der aerodynamischen Ventile führt, wodurch sich eine Druckwelle in Richtung des Resonanzrohres ausbreitet. Das in das Resonanzrohr ausströmende Gas führt zu einer Verminderung des Druckes in der Brennkammer und damit zu einem erneuten Öffnen der Ventile. Hierdurch bildet sich eine selbsterregte Schwingung aus, deren Pulsationsfrequenz von der Reaktorgeometrie und der Verbrennungstemperatur abhängt und vom Fachmann leicht angepaßt werden kann. Bevorzugt wird eine Pulsationsfrequenz zwischen 10 und 130 Hz eingestellt.

Die Temperatur der heißen Verbrennungsabgase kann zwischen etwa 650 und 1400 °C eingestellt werden. Bevorzugt wird eine Temperatur der Verbrennungsabgase zwischen 700 und 1050 °C gewählt.

Das Resonanzrohr des Pulsationsreaktors kann durch einen Ausdehnungsraum unterbrochen sein, vor dem ein Sekundärgas zur Abkühlung der Verbrennungsabgase eingeführt werden kann. Hierdurch kann die Temperatur der heißen Verbrennungsabgase im Resonanzrohr und Ausdehnungsraum auf Werte zwischen 300 und 800 °C eingestellt werden. Auf diese Weise können auch tiefe Temperaturen unterhalb von 650 °C im Resonanzrohr realisiert werden, welche mit einem konventionellen Pulsationsreaktor nicht zugänglich sind.

Die Vorläuferverbindungen können direkt in die Brennkammer des Pulsationsreaktors, in das Resonanzrohr oder in den Ausdehnungsraum eingebracht werden. Die Wahl des Einbringungsortes in den Pulsationsreaktor richtet sich danach, welche spezifischen Eigenschaften der Metalloxidverbindungen erzielt werden sollen. Durch die Wahl des Einbringungsortes kann die Behandlungsdauer und die Temperatureinwirkung bei der Reaktion zum Endprodukt verändert werden. Somit können bestimmte Eigenschaften wie die spezifische Oberfläche oder Vollständigkeit der Umsetzung des Vormaterials (z.B. die Säurelöslichkeit) beeinflußt werden. Die Reaktionstemperatur in Kombination mit der Behandlungsdauer legt z.B. die Ausbildung der Kristallmodifikation des Endproduktes fest. In Fällen, wo das Endprodukt noch Spuren von unerwünschten Oxiden enthält, können diese erfahrungsgemäß durch entsprechende Optimierung der Verfahrensparameter zum Verschwinden gebracht werden. Geeignete Verfahrensparameter für diese Optimierungen sind zum Beispiel die Konzentration der gelösten Vorläuferverbindungen, die Vorläuferverbindungen selbst, die Temperatur der heißen Gasströmung und die Verweilzeiten im Pulsationsreaktor.

Ein weiterer Vorteil zu anderen Verfahren, die kohlenstoffhaltige Brennstoffe verwenden, besteht auch darin, daß Wasserstoff als alleiniger Brennstoff oder im Gemisch mit anderen Brennstoffen eingesetzt werden kann. Dadurch wird vermieden, daß die bei Alkalimetallen sehr stabilen, das heißt bei sehr hohen Temperaturen noch beständigen Carbonate aus den kohlenstoffhaltigen Brenngasen gebildet werden, so daß die Festkörperreaktionen beschleunigt ablaufen können.

Zur Erzielung besonderer Eigenschaften (Nitrat- und Chloridreduktion, Modifikations-, Oberflächeneinstellung, Kristallausheilung, Einstellung der Kristallitgröße) kann es notwendig werden, das im Pulsationsreaktor erhaltene Metalloxidpulver einer weiteren Behandlung zu unterziehen. Hier kann ein weiterer Durchgang durch den Pulsationsreaktor oder ein mehrstufiger Pulsationsreaktor vorgesehen werden. Selbstverständlich stehen auch die üblichen thermischen Verfahren, wie die Behandlung in einem Ofen oder in einem Wirbelschichtreaktor, offen. Der entscheidende Schritt zur Erzeugung der Metalloxidverbindung ist aber durch den ersten Behandlungsschritt gegeben. Die nachfolgenden Schritte stellen nur Anpassungen zur anwendungstechnischen Optimierung dar.

Ebenso ist es möglich, aus Gründen der anwendungstechnischen Optimierung anstelle der beschriebenen thermischen Behandlung zum Beispiel eine Extraktion oder das Auswaschen löslicher Komponenten vorzusehen.

Mit dem Verfahren können zum Beispiel Metalloxidverbindungen hergestellt werden, bei denen eine Vorläuferverbindung des Lithiums mit Verbindungen von Aluminium, Mangan, Kobalt oder Zirkon vollständig oder teilweise zu den Verbindungen LiAlO₂, LiMn₂O₄, LiCoO₂ oder Li₂ZrO₃ umgesetzt wird. Weiterhin können mit dem Verfahren dotierte Verbindungen vollständig oder teilweise erhalten werden, wie zum Beispiel La_{0,85}Na_{0,15}MnO₃, LiCo_{0,8}Ni_{0,2}O₂, LiAl_{y}Co_{1-y}O₂, und LiCo_{y}Mn_{2-y}O₄.

Die Erfindung wird an Hand der folgenden Beispiele weiter verdeutlicht.

### Beispiel 1: Herstellung der dotierten Verbindung La_{0,85}Na_{0,15}MnO₃

Es wurde ein alkalimetallhaltiges Metalloxidpulver mit der Zusammensetzung La_{0,85}Na_{0,15}MnO₃ hergestellt. Zu diesem Zweck wurde eine wässerige Lösung aus Lanthannitrat, Natriumnitrat und Mangan (II) nitrat · 4 H₂O im entsprechenden stöchiometrischen Verhältnis und einer Gesamtoxidkonzentration von 10 Gew.-% (berechnet als La₂O₃, Na₂O und MnO₂) in einem Pulsationsreaktor umgesetzt. Die wässerige Lösung wurde mittels Zweistoffdüse mit 5,3 kg/h in die Brennkammer mit einer Temperatur von 800 °C eingebracht. Die Brenngasmenge betrug 2,8 kg Erdgas/h und die Verbrennungsluftmenge 66 kg/h. Das Produkt wurde aus dem heißen Gasstrom durch keramische Filterkerzen abgetrennt.

Das entstandene schwarzgraue Pulver hatte eine spezifische Oberfläche (BET) von 15m²/g, eine mittlere Korngröße d₅₀ (CILAS 920) von 14 µm und einen Glühverlust von 1,9 %. Die Röntgenbeugungsanalyse zeigte nur die Signale von Lanthanmanganoxid LaMnO₃ und belegt damit die Entstehung der dotierten Verbindung La_{0,85}Na_{0,15}MnO₃. Die chemische Analyse bestätigte diese Schlußfolgerung. Es wurde mit 52,6 Gew.-% Lanthan (theoretisch 53,0 Gew.-%), 24,5 Gew.-% Mangan (theoretisch 24,7 Gew.-%) und 1,54 Gew.-% Natrium (theoretisch 1,55 Gew.-%) im Rahmen der Analysengenauigkeit die erwartete Zusammensetzung gefunden.

### Beispiel 2 Herstellung der Verbindung LiMn₂O₄

Es wurde die alkalimetallhaltige Verbindung LiMn₂O₄ hergestellt. Dazu wurde eine wässerige Lösung aus Lithiumnitrat und Mangan (II) nitrat · 4 H₂O im entsprechenden stöchiometrischen Verhältnis und einer Gesamtoxidkonzentration von 10 Gew.-% (berechnet als Li₂O und MnO₂) in einem Pulsationsreaktor umgesetzt. Die wässerige Lösung wurde mittels Zweistoffdüse mit 5,3 kg/h in die Brennkammer bei 805 °C eingebracht. Die Brenngasmenge betrug 2,9 kg Erdgas/h und die Verbrennungsluftmenge 66 kg/h. Das Produkt wurde aus dem heißen Gasstrom durch keramische Filterkerzen abgetrennt.

Das entstandene schwarzgraue Pulver hatte eine mittlere Korngröße d₅₀ (CILAS 920) von 3,2 µm und einen Glühverlust von 1,9 %. Untersuchungen mit dem Transmissions-Elektronenmikroskop zeigten Agglomerate mit einer Primärpartikelgröße von etwa 60 nm. Die Röntgenbeugungsanalyse zeigte die Signale von Lithiummanganoxid LiMn₂O₄ neben Spuren von Mn₂O₃ und belegte damit die Entstehung der gewünschten Verbindung.

### Beispiel 3 Herstellung der Verbindung LiCoO₂

Es wurde die alkalimetallhaltige Verbindung LiCoO₂ hergestellt. Zu diesem Zweck wurde eine wässerige Lösung aus Lithiumnitrat und Kobaltnitrat · 6 H₂O im entsprechenden stöchiometrischen Verhältnis und einer Gesamtoxidkonzentration von 10 Gew.-% (berechnet als Li₂O und CoO) in einem Pulsationsreaktor umgesetzt. Die wässerige Lösung wurde mittels Zweistoffdüse mit 5,3 kg/h in die Brennkammer bei 710 °C eingebracht. Die Brenngasmenge betrug 2,9 kg Erdgas/h und die Verbrennungsluftmenge 66 kg/h. Das Produkt wurde aus dem heißen Gasstrom durch keramische Filterkerzen abgetrennt.

Das entstandene schwarzgraue Pulver hatte eine spezifische Oberfläche (BET) von 18m²/g und eine mittlere Korngröße d₅₀ (CILAS) von 16 µm. Die Röntgenbeugungsanalyse zeigte die Signale von Lithiumkobaltoxid LiCoO₂ neben Spuren von Co₃O₄ und belegte damit die Entstehung der gewünschten Verbindung.

## Patentansprüche

1. Verfahren zur Herstellung einer alkalimetallhaltigen, mehrkomponentigen Metalloxidverbindung in Pulverform,
**dadurch gekennzeichnet,**
**daß** Vorläuferverbindungen der Komponenten der gewünschten Metalloxidverbindung in fester Form oder in Form einer Lösung oder einer Suspension in einen Pulsationsreaktor mit einer aus einer flammenlosen Verbrennung resultierenden Gasströmung eingebracht und teilweise oder vollständig zur gewünschten Metalloxidverbindung umgesetzt werden, wobei die Vorläuferverbindungen ein Gemisch wenigstens einer ersten Metallverbindung ausgewählt aus Verbindungen des Lithiums, Natriums, Kaliums, Rubidium und Cäsiums mit wenigstens einer zweiten Metallverbindung, ausgewählt aus Verbindungen des Aluminiums, Mangens, Kobalts, Zirkons, Eisens, Chroms, Zinks, Nickels und Verbindungen der Lanthaniden, im gewünschten Verhältnis enthalten.

2. Verfahren nach Anspruch 1,
**dadurch gekennzeichnet,**
**daß** die Vorläuferverbindungen der ersten und zweiten Metallverbindungen Salze anorganischer oder organischer Säuren oder anorganischer oder organischer Verbindungen sind und als wässerige oder nichtwässerige Lösungen in den Pulsationsreaktor eingebracht werden.

3. Verfahren nach Anspruch 2,
**dadurch gekennzeichnet,**
**daß** die Vorläuferverbindungen der ersten und zweiten Metallverbindungen in Form von Nitraten, Chloriden, Sulfaten, Acetaten, Amminen, Hydroxiden, Carbonaten, Oxalaten, Citraten oder Tartraten vorliegen.

4. Verfahren nach Anspruch 3,
**dadurch gekennzeichnet,**
**daß** die wässerigen oder nichtwässerigen Lösungen der Vorläuferverbindungen zusätzlich feste Komponenten in Form von Hydroxiden, Oxiden, Carbonaten, Oxalaten und/oder anderen ungelöst vorliegenden Salzen der ersten und zweiten Metallverbindungen enthalten.

5. Verfahren nach Anspruch 1,
**dadurch gekennzeichnet,**
**daß** ein inniges Gemenge von Feststoffen in Form von feinteiligen Hydroxiden, Oxiden, anorganischen oder organischen Salzen der ersten und zweiten Metallverbindungen in den Pulsationsreaktor eingebracht werden.

6. Verfahren nach einem der vorhergehenden Ansprüche,
**dadurch gekennzeichnet,**
**daß** der Pulsationsreaktor eine Brennkammer, ein Resonanzrohr und gegebenenfalls im Resonanzrohr einen Ausdehnungsraum enthält und in der Brennkammer durch Verbrennen eines Brennstoffes heiße Verbrennungsabgase erzeugt werden, die anschließend durch das Resonanzrohr und gegebenenfalls den Ausdehnungsraum strömen und die Vorläuferverbindungen direkt in die Brennkammer des Pulsationsreaktors, in das Resonanzrohr oder in den Ausdehnungsraum eingebracht werden.

7. Verfahren nach Anspruch 6,
**dadurch gekennzeichnet,**
**daß** die Gasströmung des Pulsationsreaktors mit 10-130 Hz pulsiert.

8. Verfahren nach Anspruch 7,
**dadurch gekennzeichnet,**
**daß** die Temperatur der heißen Verbrennungsabgase zwischen 650 und 1400 °C beträgt.

9. Verfahren nach Anspruch 8,
**dadurch gekennzeichnet,**
**daß** die Temperatur der heißen Verbrennungsabgase zwischen 700 und 1050 °C beträgt.

10. Verfahren nach Anspruch 9,
**dadurch gekennzeichnet,**
**daß** den heißen Verbrennungsabgasen zwischen Brennkammer und Ausdehnungsraum ein Sekundärgas zur Abkühlung der Verbrennungsabgase auf eine Temperatur zwischen 300 und 800 °C zugemischt wird.

11. Verfahren nach einem der Ansprüche 6 bis 10,
**dadurch gekennzeichnet,**
**daß** der Brennstoff für den Pulsationsreaktor aus Wasserstoff besteht oder enthält.

12. Verfahren nach Anspruch 11,
**dadurch gekennzeichnet,**
**daß** als Metall der ersten Metallverbindungen Lithium eingesetzt wird, welches mit den Metallen der zweiten Metallverbindungen ausgewählt aus Aluminium, Mangan, Kobalt und Zirkon vollständig oder teilweise zu den Verbindungen
LiAlO₂, LiMn₂O₄, LiCoO₂ oder Li₂ZrO₃ umgesetzt wird.

## Claims

1. Method for producing a multi-constituent metal oxide compound in powder form containing alkali metals,
**characterized in that**
precursors of components of the desired metal oxide compound in solid state or in the state of a solution or suspension are introduced into a pulsation reactor with a gas stream resulting from a flameless combustion and that they partly or completely result in a reaction of a metal oxide compound, whereas the precursors contain a mixture of at least one first metal compound chosen from compounds of lithium, sodium, potassium, rubidium, cesium and at least one second metal compound chosen from compounds of aluminum, manganese, cobalt, zircon, iron, chromium, zinc, nickel, and compounds of lanthanides in desired proportions.

2. The method according to claim 1,
**characterized in that**
the precursors of the first and second metal compounds are salts of inorganic or organic acids or salts of inorganic or organic compounds and that they are introduced into the pulsation reactor as aqueous or non-aqueous solutions.

3. The method according to claim 2,
**characterized in that**
the precursors of the first and second metal compounds are provided in the form of nitrates, chlorides, sulfates, acetates, ammines, hydroxides, carbonates, oxalates, citrates or tartrates.

4. The method according to claim 3,
**characterized in that**
the aqueous or non-aqueous solutions of the precursors additionally contain solid compounds in the form of hydroxides, oxides, carbonates, oxalates and / or other undissolved salts of the first and second metal compounds.

5. The method according to claim 1,
**characterized in that**
a profound mixture of solids in the form of finely divided hydroxides, oxides, inorganic or organics salts of the first and second metal compounds are introduced into the pulsation reactor.

6. The method according to one of the preceding claims,
**characterized in that**
the pulsation reactor contains a combustion chamber, a resonance tube and where applicable an extension area within the resonance tube and that hot combustion exhaust gases arise within the combustion chamber caused by combustion of a combustible, the combustion exhaust gases subsequently flowing through the resonance tube and where applicable through the extension area and that the precursors are directly introduced into the combustion chamber of the pulsation reactor, into the resonance tube or into the extension area.

7. The method according to claim 6,
**characterized in that**
the gas flow of the pulsation reactor pulses at 10 to 130 hertz.

8. The method according to claim 7,
**characterized in that**
the temperature of the hot combustion exhaust gases is between 650 °C and 1400 °C.

9. The method according to claim 8,
**characterized in that**
the temperature of the hot combustion exhaust gases is between 700 °C and 1050 °C.

10. The method according to claim 9,
**characterized in that**
the hot combustion exhaust gases are mixed with a secondary gas between the combustion chamber and the extension area for cooling the combustion exhaust gases to a temperature between 300 °C and 800 °C.

11. The method according to one of the claims 6 to 10,
**characterized in that**
the combustible for the pulsation reactor consists of or contains hydrogen.

12. The method according to claim 11,
**characterized in that**
lithium is provided as metal of the first metal compounds, which completely or partly results in a reaction of LiAlO₂, LiMn₂O₄, LiCoO₂ or Li₂ZrO₃ with the metals of the second metal compounds chosen from aluminum, manganese, cobalt and zircon.

## Revendications

1. Procédé de fabrication d'un composé d'oxyde métallique multicomposant contenant un métal alcalin sous forme de poudre,
**caractérisé en ce que**
des composés précurseurs des composants du composé d'oxyde métallique souhaité sous forme solide ou sous la forme d'une solution ou d'une suspension sont introduits dans un réacteur à pulsation avec un courant gazeux résultant d'une combustion sans flamme et transformés en partie ou en totalité en le composé d'oxyde métallique souhaité, les composés précurseurs contenant un mélange d'au moins un premier composé métallique choisi parmi les composés de lithium, sodium, potassium, rubidium et césium avec au moins un second composé métallique choisi parmi les composés d'aluminium, manganèse, cobalt, zirconium, fer, chrome, zinc, nickel, et les composés de lanthanides, en le rapport souhaité.

2. Procédé selon la revendication 1, **caractérisé en ce que** les composés précurseurs des premiers et seconds composés métalliques sont des sels d'acides inorganiques ou organiques ou des composés inorganiques ou organiques, et sont introduits dans le réacteur à pulsation sous la forme de solutions aqueuses ou non aqueuses.

3. Procédé selon la revendication 2, **caractérisé en ce que** les composés précurseurs des premiers et seconds composés métalliques se présentent sous la forme de nitrates, chlorures, sulfates, acétates, amines, hydroxydes, carbonates, oxalates, citrates ou tartrates.

4. Procédé selon la revendication 3, **caractérisé en ce que** les solutions aqueuses ou non aqueuses des composés précurseurs contiennent également des composants solides sous la forme d'hydroxydes, oxydes, carbonates, oxalates et/ou d'autres sels présents sous forme non dissoute des premiers et seconds composés métalliques.

5. Procédé selon la revendication 1, **caractérisé en ce qu'**un mélange intime de solides sous la forme d'hydroxydes, oxydes, sels inorganiques ou organiques finement divisés des premiers et seconds composés métalliques est introduit dans le réacteur à pulsation.

6. Procédé selon l'une quelconque des revendications précédentes, **caractérisé en ce que** le réacteur à pulsation contient une chambre de combustion, un tube de résonance et éventuellement dans le tube de résonance une chambre de détente, et des gaz d'échappement de combustion chauds sont générés dans la chambre de combustion par combustion d'un combustible, qui s'écoulent ensuite dans le tube de résonance et éventuellement dans la chambre de détente, et les composés précurseurs sont introduits directement dans la chambre de combustion du réacteur à pulsation, dans le tube de résonance ou dans la chambre de détente.

7. Procédé selon la revendication 6, **caractérisé en ce que** le courant gazeux du réacteur à pulsation est pulsé avec 10 à 130 Hz.

8. Procédé selon la revendication 7, **caractérisé en ce que** la température des gaz d'échappement de combustion chauds est comprise entre 650 et 1 400 °C.

9. Procédé selon la revendication 8, **caractérisé en ce que** la température des gaz d'échappement de combustion chauds est comprise entre 700 et 1 050 °C.

10. Procédé selon la revendication 9, **caractérisé en ce qu'**un gaz secondaire est mélangé avec les gaz d'échappement de combustion chauds entre la chambre de combustion et la chambre de détente pour refroidir les gaz d'échappement de combustion à une température comprise entre 300 et 800 °C.

11. Procédé selon l'une quelconque des revendications 6 à 10, **caractérisé en ce que** le combustible pour le réacteur à pulsation est constitué d'hydrogène ou contient de l'hydrogène.

12. Procédé selon la revendication 11, **caractérisé en ce que** du lithium est utilisé en tant que métal des premiers composés métalliques, qui est mis en réaction en partie ou en totalité avec les métaux des seconds composés métalliques choisis parmi l'aluminium, le manganèse, le cobalt et le zirconium pour former les composés LiAlO₂, LiMn₂O₄, LiCoO₂ ou Li₂ZrO₃.
